# EUROPEAN PATENT APPLICATION

(11) **EP 4 693 020 A1**
(43) Date of publication of application: **11.02.2026**
(21) Application number: 23933858.5
(22) Date of filing: 04.12.2023
(51) Int. Cl.: G06F 8/30, G06F 8/38

(54) **CODE DEVELOPMENT METHOD AND RELATED DEVICE**

(30) Priority: 21.04.2023 CN 202310437587; 30.05.2023 CN 202310627212
(71) Applicant: Huawei Cloud Computing Technologies Co., Ltd., Guizhou 550025 (CN)
(72) Inventor: YE, Yida, Gui'an New District, Guizhou 550025 (CN); ZHOU, Linfeng, Gui'an New District, Guizhou 550025 (CN); ZHANG, Yanwei, Gui'an New District, Guizhou 550025 (CN)
(74) Representative: Maiwald GmbH
(86) International application number: PCT/CN2023/136064
(87) International publication number: WO 2024/216992

(57) **Abstract**

This application provides a code development method, applied to a code development platform, and including: receiving function description information that is of a target workflow and that is input by a user; obtaining, based on the function description information, a function description text including call statements, where the call statements include a trigger call statement used to start the target workflow and an action interface call statement used to execute the target workflow; then mining and analyzing the function description text to obtain a logical relationship between the call statements; and generating code of the target workflow based on the logical relationship between the call statements, and rendering a view of the target workflow based on the code of the target workflow. This method provides a capability of intelligently generating code of a workflow, reduces dependency on manual design of a developer, improves development efficiency, and can meet a service requirement.

## Description

This application claims priority to Chinese Patent Application No. 202310437587.1, filed with the China National Intellectual Property Administration on April 21, 2023 and entitled "APPLICATION MANAGEMENT METHOD AND RELATED SYSTEM", and to Chinese Patent Application No. 202310627212.1, filed with the China National Intellectual Property Administration on May 30, 2023 and entitled "CODE DEVELOPMENT METHOD AND RELATED DEVICE", both of which are incorporated herein by reference in their entireties.

### TECHNICAL FIELD

This application relates to the field of code development technologies, and in particular, to a code development method and platform, a computing device cluster, a computer-readable storage medium, and a computer program product.

### BACKGROUND

With rapid development of the information technology (information technology, IT) and mobile Internet, more organizations like enterprises or institutions start to reconstruct processes and management by using technical means, for example, develop workflows (workflow), to make service development more efficient and standard. A workflow means automation of a part or the whole of a service process in a computer application environment, and is an abstract and general description of a working process and a service rule between action steps thereof.

To improve development efficiency, a developer may use a low-code development tool (including a zero-code development tool) to develop a workflow. Low-code development aims to enable the developer to build an application (for example, a workflow) by writing as little code as possible or even without writing code.

When a low-code development tool is used to develop an application function, a plurality of types of triggers/actions (trigger/action) usually need to be combined for use. Most low-code development tools depend heavily on manual design of the developer and lack intelligent generation and assistant capabilities, which greatly affects development efficiency and cannot meet a service requirement.

### SUMMARY

This application provides a code development method. This method provides a capability of intelligently generating code of a workflow, reduces dependency on manual design of a developer, improves development efficiency, and can meet a service requirement. This application further provides a code development platform corresponding to the foregoing method, a computing device cluster, a computer-readable storage medium, and a computer program product.

According to a first aspect, this application provides a code development method. The method may be performed by a code development platform. The code development platform is used to develop code of an application, for example, code of a workflow (application). The code development platform may be a low-code development platform, which is also referred to as a low-code development tool. The low-code development platform is used to build an application by developing a small amount of code, for example, build a workflow by developing a small amount of code.

Specifically, the code development platform receives function description information that is of a target workflow and that is input by a user, and obtains, based on the function description information, a function description text including call statements. The call statements include a trigger call statement used to start the target workflow and an action interface call statement used to execute the target workflow. Then, the code development platform mines and analyzes the function description text to obtain a logical relationship between the call statements, generates code of the target workflow based on the logical relationship between the call statements, and renders a view of the target workflow based on the code of the target workflow.

In the method, the function description information (for example, an original function description text or function description speech) input by the user is processed to obtain the function description text including the call statements, then the logical relationship between the call statements, for example, a logical relationship between a trigger and an action, or a logical relationship between actions, is obtained by using a text mining technology, and the code of the target workflow corresponding to the function description information is automatically generated based on the logical relationship, thereby reducing dependency on a developer, reducing time costs of low-code development of the developer, and improving development efficiency. In addition, the code of the workflow generated by using the method supports multi-branch complex service logic such as parallel and conditional, and can further automatically fill in a trigger/action parameter. For example, the trigger/action parameter is obtained by mining and analyzing the function description text including the call statements, and the parameter is automatically filled in based on a mining and analysis result. In this way, a service requirement can be met.

In some possible implementations, the code development platform may generate code of a workflow of a current round based on the logical relationship between the call statements, and render a view of the workflow of the current round based on the code of the workflow of the current round, where the view of the workflow of the current round includes a first node, and the first node is a key node identified based on the logical relationship; and perform iterative update on the code of the workflow of the current round based on the function description text and the logical relationship, to obtain the code of the target workflow, and render the view of the target workflow based on the code of the target workflow, where the view of the target workflow includes the first node and a second node.

In this method, the code of the workflow is generated in a diffusion manner, so that an intelligent generation capability of the code of the workflow is provided, and code of a key node is preferentially generated, so that generation accuracy can be further improved.

In some possible implementations, the code development platform may further present the view of the workflow to the user, and update at least one of a node or a node connection relationship in the view of the workflow in response to an update operation of the user.

In this way, a generated node can be manually intervened, for example, a generated node or connection relationship can be updated, to perform error correction in time in a code generation process, thereby ensuring generation accuracy.

In some possible implementations, the code development platform may generate code of a plurality of candidate workflows based on the logical relationship between the call statements, and render views of the plurality of candidate workflows based on the code of the plurality of candidate workflows; and determine the code of the target workflow and determine the view of the target workflow based on an execution result that is in a sandbox and that is of a service orchestrated for the views of the plurality of candidate workflows.

In this method, the code of the candidate workflow is executed in the sandbox to ensure that a finally recommended (finally generated) workflow can be executed.

In some possible implementations, the code development platform may generate code of a plurality of workflows based on the logical relationship between the call statements; and determine the code of the plurality of candidate workflows from the code of the plurality of workflows based on at least one of complexity of the code or attributes of action interfaces of the plurality of workflows.

In this method, code of a high-quality candidate workflow is selected from the generated code of the workflow, so that subsequent computing overheads can be reduced.

In some possible implementations, the logical relationship includes one or more of a parameter dependency, a serial execution sequence, a parallel group number, a conditional branch, and a loop. This method supports not only a simple logical relationship, but also a complex logical relationship, which can meet a service requirement.

In some possible implementations, the code development platform may further present the logical relationship between the call statements to the user, and receive confirmation information or update information of the user for the logical relationship. Correspondingly, the code development platform may generate the code of the target workflow based on a confirmed logical relationship or an updated logical relationship.

This method ensures accuracy of subsequent code generation of a workflow by supporting the user in confirming or assisting in replacing the logical relationship.

In some possible implementations, the code development platform may further send a request based on a name of a trigger or an action interface and an input parameter in the call statement; and when a response is received, retain the trigger or the action interface in the function description text.

In this method, the request is sent to verify whether the trigger/action in the function description text can be called to ensure accuracy of subsequent code generation of a workflow.

In some possible implementations, the code development platform may further present the function description text to the user, and receive confirmation information or update information of the user for the call statements in the function description text. Correspondingly, the code development platform may mine and analyze the function description text confirmed by the user or the function description text replaced by the user, to obtain the logical relationship between the call statements.

In this method, the trigger/action in the function description text is manually confirmed or replaced with assistance to ensure accuracy of subsequent code generation of a workflow.

According to a second aspect, this application provides a code development platform. The code development platform is configured to generate code of a workflow, and the code development platform includes:
an interaction subsystem, configured to receive function description information that is of a target workflow and that is input by a user; and
a generation subsystem, configured to obtain, based on the function description information, a function description text including call statements, where the call statements include a trigger call statement used to start the target workflow and an action interface call statement used to execute the target workflow;
the generation subsystem is further configured to mine and analyze the function description text to obtain a logical relationship between the call statements; and
the generation subsystem is further configured to generate code of the target workflow based on the logical relationship between the call statements, and render a view of the target workflow based on the code of the target workflow.

In some possible implementations, the generation subsystem is specifically configured to:
generate code of a workflow of a current round based on the logical relationship between the call statements, and render a view of the workflow of the current round based on the code of the workflow of the current round, where the view of the workflow of the current round includes a first node, and the first node is a key node identified based on the logical relationship; and
perform iterative update on the code of the workflow of the current round based on the function description text and the logical relationship, to obtain the code of the target workflow, and render the view of the target workflow based on the code of the target workflow, where the view of the target workflow includes the first node and a second node.

In some possible implementations, the interaction subsystem is further configured to:
present the view of the workflow to the user; and
the generation subsystem is further configured to:
   update at least one of a node or a node connection relationship in the view of the workflow in response to an update operation of the user.

In some possible implementations, the generation subsystem is specifically configured to:
generate code of a plurality of candidate workflows based on the logical relationship between the call statements, and render views of the plurality of candidate workflows based on the code of the plurality of candidate workflows; and
the code development platform further includes:
   a debugging and release subsystem, configured to determine the code of the target workflow and determine the view of the target workflow based on an execution result that is in a sandbox and that is of a service orchestrated for the views of the plurality of candidate workflows.

In some possible implementations, the generation subsystem is specifically configured to:
generate code of a plurality of workflows based on the logical relationship between the call statements; and
determine the code of the plurality of candidate workflows from the code of the plurality of workflows based on at least one of complexity of the code or attributes of action interfaces of the plurality of workflows.

In some possible implementations, the interaction subsystem is further configured to:
present the logical relationship between the call statements to the user; and
receive confirmation information or update information of the user for the logical relationship; and
the generation subsystem is specifically configured to:
   generate the code of the target workflow based on a confirmed logical relationship or an updated logical relationship.

In some possible implementations, the generation subsystem is further configured to:
send a request based on a name of a trigger or an action interface and an input parameter in the call statement; and
when a response is received, retain the trigger or the action interface in the function description text.

In some possible implementations, the interaction subsystem is further configured to:
present the function description text to the user; and
receive confirmation information or update information of the user for the call statements in the function description text; and
the generation subsystem is specifically configured to:
   mine and analyze the function description text confirmed by the user or the function description text replaced by the user, to obtain the logical relationship between the call statements.

According to a third aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to enable the computing device or the computing device cluster to perform the code development method according to any one of the first aspect or the implementations of the first aspect.

According to a fourth aspect, this application provides a computer-readable storage medium. The computer-readable storage medium stores instructions. The instructions instruct a computing device or a computing device cluster to perform the code development method according to any one of the first aspect or the implementations of the first aspect.

According to a fifth aspect, this application provides a computer program product including instructions. When the computer program product is run on a computing device or a computing device cluster, the computing device or the computing device cluster is enabled to perform the code development method according to any one of the first aspect or the implementations of the first aspect.

Based on the implementations provided in the foregoing aspects, this application may further combine technologies in this application to provide more implementations.

### BRIEF DESCRIPTION OF DRAWINGS

To describe the technical methods in embodiments of this application more clearly, the following briefly describes the accompanying drawings for describing embodiments.
FIG. 1 is an architectural diagram of a code development platform according to an embodiment of this application;
FIG. 2 is a schematic flowchart of different phases in a code development method according to an embodiment of this application;
FIG. 3 is a flowchart of a code development method according to an embodiment of this application;
FIG. 4 is a diagram of a structure of a computing device according to an embodiment of this application;
FIG. 5 is a diagram of a structure of a computing device cluster according to an embodiment of this application;
FIG. 6 is a diagram of a structure of another computing device cluster according to an embodiment of this application; and
FIG. 7 is a diagram of a structure of still another computing device cluster according to an embodiment of this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

A workflow (workflow) is an abstract and general description of a working process and service rules between action steps thereof. To facilitate description of a workflow process, a graphical view may be used for display. The graphical view is also referred to as a workflow canvas. Specifically, a workflow view (for example, a workflow canvas) includes a plurality of nodes. Further, the workflow view may include a node connection relationship. The node connection relationship may be directed. In other words, the workflow view may include a directed graph (directed graph). The nodes in the workflow view may be classified into a trigger (trigger) and an action interface (action for short namely, action) hased on functions

Each workflow includes one trigger, and the trigger defines a call that can instantiate and start the workflow. In other words, the trigger indicates a trigger condition for starting the workflow. Based on this, the trigger may generally be a first node in a graph. There may be different types of triggers. For example, the triggers may include but are not limited to a polling trigger, a push trigger, a repeat trigger, and a request repeater. The polling trigger periodically checks an endpoint (endpoint) of a service. The push trigger creates a subscription to an endpoint and provides a callback uniform resource locator (uniform resource locator, URL), such as endpoint-subscribe-URL, so that the endpoint can notify the trigger when a specified event occurs or data is available. The repeat trigger is used to trigger a workflow based on a specified repeat set to run periodically. The request trigger is used to make a workflow executable by creating an endpoint that can accept an incoming request. The trigger may include at least one of the following elements: a trigger name (for example, trigger-name), a trigger behavior input (for example, trigger-inputs), and a trigger frequency (for example, time-unit).

Each workflow includes one or more action interfaces (action for short, action). Each action defines a call of a method or a function for executing an action step of the workflow, specifically, an application programming interface (application programming interface, API) for executing an operation or a function. For a cloud vendor, an action may be a specific API in a cloud service, where the cloud service may be a set of actions for processing a same type of services, and is also referred to as a connector.

To improve workflow development efficiency, a developer may use a low-code development tool to develop a workflow. The low-code development tool can generate a workflow canvas based on a function description text input by a user (for example, a developer). Specifically, when the developer develops a workflow in the low-code development tool, the developer first inputs a text (also referred to as a function description text) of a required function in a text box, and then the low-code development tool may automatically generate a workflow framework based on the function description text. On this basis, the developer may manually fill in a trigger/action parameter, process complex logic, debug the workflow, and release the workflow.

The low-code development tool depends heavily on manual design of the developer and lacks intelligent generation and assistant capabilities. For example, the low-code development tool cannot process complex service logic, which greatly affects development efficiency and cannot meet a service requirement.

In view of this, this application provides a code development method. The method may be performed by a code development platform. In some examples, the code development platform may be a software system. The software system may be an independent software system, or may be integrated into another software system. For example, the software system may be integrated into a development and debugging platform or development and debugging software in a form of a plug-in, a function module, a component, or a script. The development and debugging platform or the development and debugging software may be an integrated development environment (integrated development environment, IDE) or a developer desktop. The software system may be deployed in a computing device cluster, and the computing device cluster executes program code of the software system, to perform the code development method in this application. In some other examples, the code development platform may be a hardware system. The hardware system may have an intelligent generation capability, for example, a computing device cluster having a function of generating code of a workflow. When the hardware system runs, the code development method in this application is performed.

Specifically, the code development platform receives function description information that is of a target workflow and that is input by a user; obtains, based on the function description information, a function description text including call statements, where the call statements include a trigger call statement used to start the target workflow and an action interface call statement used to execute the target workflow; then mines and analyzes the function description text to obtain a logical relationship between the call statements; and generates code of the target workflow based on the logical relationship between the call statements, and renders a view of the target workflow based on the code of the target workflow.

In the method, the function description information (for example, an original function description text or function description speech) input by the user is processed to obtain the function description text including the call statements, then the logical relationship between the call statements, for example, a logical relationship between a trigger and an action, or a logical relationship between actions, is obtained by using a text mining technology, and the code of the target workflow corresponding to the function description information is automatically generated based on the logical relationship, thereby reducing dependency on a developer, reducing time costs of low-code development of the developer, and improving development efficiency. In addition, the code of the workflow generated by using the method supports multi-branch complex service logic such as parallel and conditional, and can further automatically fill in a trigger/action parameter. For example, the trigger/action parameter is obtained by mining and analyzing the function description text including the call statements, and the parameter is automatically filled in based on a mining and analysis result. In this way, a service requirement can be met.

Further, the method not only provides a capability of intelligently generating a workflow, but also provides assistant capabilities such as processing different authentication and authorization manners, automatic debugging, and execution, so as to ensure that a generated workflow meets a service expectation, and ensure that the generated workflow can run directly. In this way, workflows (applications and services) developed with low code can be quickly and accurately released.

To make the technical solutions of this application clearer and easier to understand, the following describes an architecture of the code development platform in embodiments of this application with reference to the accompanying drawings.

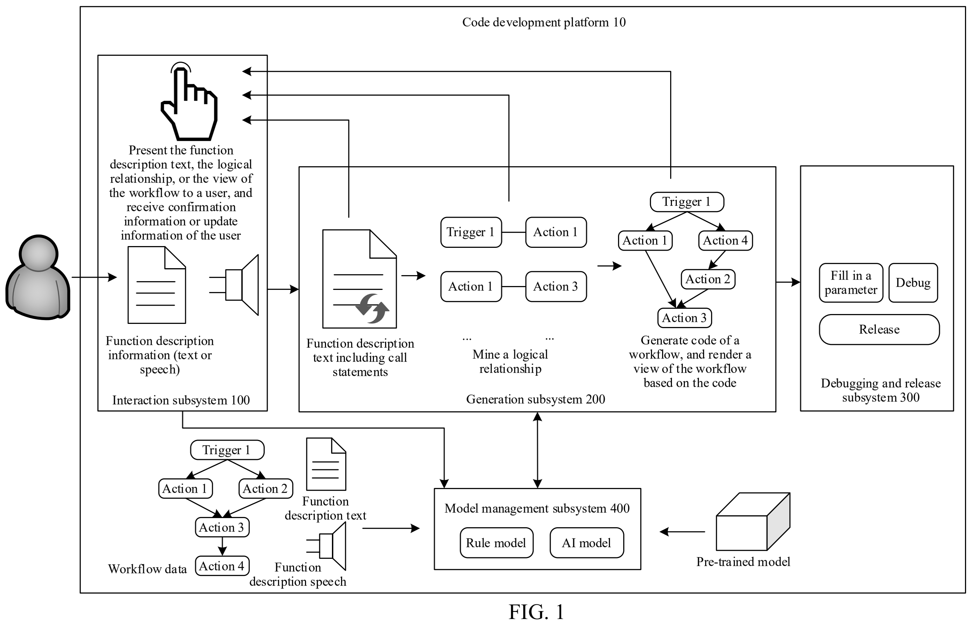

Refer to an architectural diagram of a code development platform shown in FIG. 1. The code development platform 10 includes an interaction subsystem 100 and a generation subsystem 200. The interaction subsystem 100 is configured to receive function description information that is of a target workflow and that is input by a user. As shown in FIG. 1, the function description information may be a text or a speech. The generation subsystem 200 is configured to obtain, based on the function description information, a function description text including call statements, where the call statements include a trigger call statement used to start the target workflow and an action interface call statement used to execute the target workflow; mine and analyze the function description text including the call statements to obtain a logical relationship between the call statements; and generate the target workflow corresponding to the function description information based on the logical relationship between the call statements.

When the function description information input by the user is a text, the generation subsystem 200 may replace a keyword in the text with a call statement. When the function description information input by the user is a speech, the generation subsystem 200 may convert the speech through speech-to-text, and then replace a keyword in a text obtained through conversion with a call statement, so as to obtain a function description text including the call statement. The call statement in the function description text may be independent, to be specific, the function description text includes an independent trigger/action call. The call statement may include at least one of an authentication manner, a request method, and an input parameter.

In some possible implementations, the interaction subsystem 100 may further present the function description text to the user, and receive confirmation information or update information of the user for the call statements in the function description text. In this way, user-assisted confirmation or replacement can be implemented, thereby ensuring accuracy of the call statements in the function description text, and further ensuring accuracy of a subsequently generated workflow.

For a replaced function description text (a rewritten function description text), the generation subsystem 200 mines and analyzes the logical relationship between the call statements through text mining, for example, logical relationships of a plurality of independent trigger/action calls in the text. The generation subsystem 200 may obtain, through mining and analysis, complex logical relationships of a plurality of triggers/actions that meet a service function required by the user, for example, one or more of a parameter dependency, a serial execution sequence, a parallel group number, a conditional branch, and a loop.

Similarly, the interaction subsystem 100 is further configured to present the logical relationship between the call statements to the user, so as to implement visual presentation to the user. The interaction subsystem 100 may further receive confirmation information or update information of the user for the logical relationship, so that user-assisted confirmation or replacement can be implemented, thereby ensuring accuracy of the logical relationship and further ensuring accuracy of the subsequently generated workflow.

After obtaining the logical relationship (for example, a logical relationship mined by the generation subsystem 200, a logical relationship confirmed by the user, or a logical relationship updated by the user), the generation subsystem 200 may generate the code of the target workflow based on the logical relationship, and render the view of the target workflow based on the code of the target workflow. The generation subsystem 200 may generate, in a diffusion manner by using a language model, the code of the target workflow corresponding to the function description information. For example, the code of the target workflow may be in a JavaScript Object Notation (JavaScript Object Notation, JSON) format. The generation subsystem 200 may parse the code by using a front-end component, for example, parse JSON code to render the view (a workflow canvas) of the target workflow. It should be noted that different front-end components can render views of different colors, styles, or directions (horizontal flow or vertical flow) for a same JSON code file. The target workflow may be a low-code workflow including complex service logic. To improve generation accuracy, during diffusion generation, code of a key node (also referred to as an important node or a hub node) may be preferentially generated, and then the key node is first rendered. The key node may be identified according to a related rule or based on a specified indicator.

Specifically, the generation subsystem 200 may first generate code of a workflow of a current round based on the logical relationship between the call statements, and render a view of the workflow of the current round based on the code of the workflow of the current round. The view of the workflow of the current round includes a first node. The first node is a key node identified based on the logical relationship. The generation subsystem 200 further performs iterative update on the code of the workflow of the current round based on the function description text and the logical relationship, to obtain the code of the target workflow, and renders the view of the target workflow based on the code of the target workflow. It should be noted that the generation subsystem 200 may further set a stop condition for diffusion generation. When the stop condition is met, the generation subsystem 200 stops iterative update, and determines a workflow that is updated (latest or last) as the target workflow corresponding to the function description information. The target workflow includes the first node and a second node. The second node is a new node identified in an iterative update process.

Similar to the function description text and the logical relationship, the interaction subsystem 100 is further configured to present the view of the workflow to the user, and update at least one of a node or a node connection relationship in the view of the workflow in response to an update operation of the user. In this way, when a generation error occurs, the user can intervene in time, so that the generation subsystem 200 regenerates a new node in the workflow based on a previous correctly generated key node.

In some possible implementations, the generation subsystem 200 may generate code of a plurality of workflows based on the logical relationship between the call statements, and may determine a plurality of candidate workflows corresponding to the function description information from the plurality of workflows based on at least one of complexity of the code or attributes of action interfaces of the plurality of workflows. Specifically, the generation subsystem 200 may determine the candidate workflows from the plurality of workflows based on a specified indicator, for example, complexity and fees (for example, action interface call fees). The candidate workflows may be high-quality low-code workflows.

The target workflow may be one or more workflows in the candidate workflows. In some possible implementations, the code development platform 10 may further include a debugging and release subsystem 300, and the debugging and release subsystem 300 is configured to determine the target workflow from the plurality of candidate workflows. Specifically, the debugging and release subsystem 300 is configured to determine the code of the target workflow and the view of the target workflow based on an execution result that is in a sandbox and that is of a service orchestrated for the views of the plurality of candidate workflows. In this way, it can be ensured that the code of the target workflow can be successfully executed, so that an optimal generation result can be recommended to the user. It should be noted that, if code of a plurality of candidate workflows can be successfully executed, an appropriate target workflow may be further recommended to the user based on a preset indicator, for example, performance/execution time consumption and complexity.

Similar to the function description text and the logical relationship, the interaction subsystem 100 is further configured to present the candidate workflow to the user, and receive confirmation information or update information of the user for the candidate workflow. The update information may be adjustment information of a priority of the candidate workflow. In this way, the user can assist in confirming or adjusting the priority of the candidate workflow.

In the embodiment shown in FIG. 1, the code development platform 10 may further include a model management subsystem 400. The model management subsystem 400 is configured to construct a rule model or an AI model. The rule model may include at least one of a rule used to replace a keyword with a call statement, a rule used to obtain a logical relationship based on a function description text including call statements, and a rule used to generate code of a workflow based on a logical relationship. The AI model may include at least one of a model used to replace a keyword with a call statement, a model used to obtain a logical relationship based on a function description text including call statements, and a model used to generate code of a workflow based on a logical relationship. The rule model may be obtained by learning workflow data, function description text data, and function description speech data, and the AI model may be obtained by fine-tuning a pre-trained model by using the workflow data, the function description text data, and the function description speech data.

In some possible implementations, the model management subsystem 400 includes a data collection module, a data annotation module, and a model training module. The data collection module is configured to collect at least one of the function description text data and the function description speech data, and collect the workflow data (for example, code of a workflow). The data annotation module is configured to perform data annotation. For example, the data annotation module may determine workflow data corresponding to the function description text data and the function description speech data, and use the workflow data as annotation information, so as to obtain annotation data. The model training module is configured to perform model training based on the annotation data. Training of the AI model is used as an example for description. The model training module may obtain a pre-trained model, and input the annotation data into the pre-trained model for fine-tuning, to obtain the AI model.

The code development platform 10 provides a visualized user operation interface (for example, an interface for presenting the function description text, the logical relationship, or the workflow on the interaction subsystem 100) and internal tool implementation (for example, the generation subsystem 200, the debugging and release subsystem 300, and the model management subsystem 400), where the internal tool implementation is not perceived by the user.

The following further describes the technical solutions of this application from a perspective of internal tool implementation and user interaction.

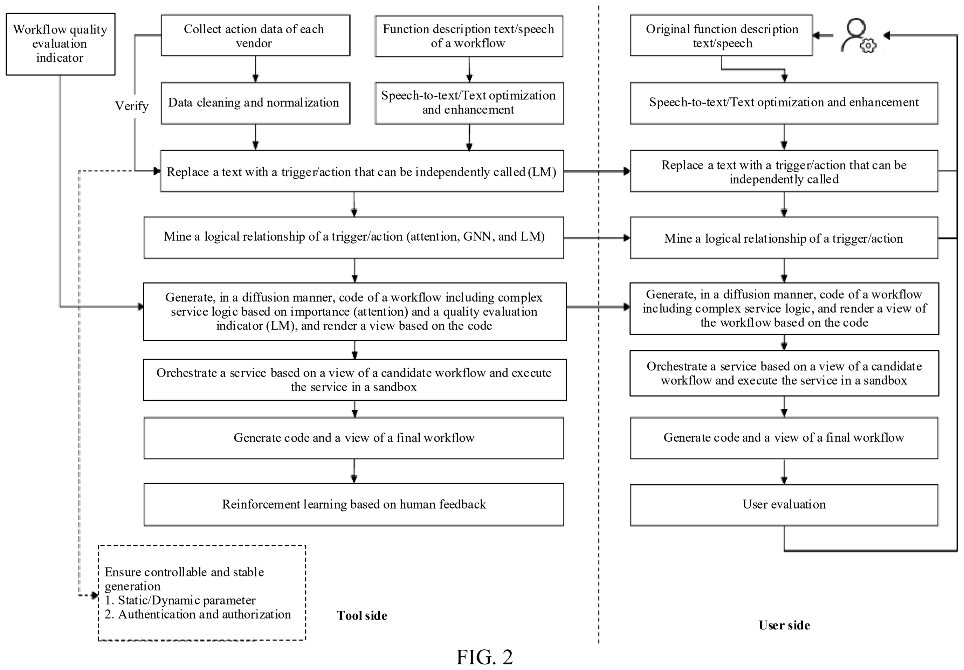

Refer to a schematic flowchart of a code development method shown in FIG. 2. In FIG. 2, tool internal implementation on the left is corresponding to an AI model (for example, a machine learning/deep learning model) training phase, and a right part is a user interaction part corresponding to an AI model (for example, a machine learning/deep learning model) inference phase.

In the AI model training phase, the code development platform 10 may collect action data, and collect at least one of a function description text or a function description speech of a workflow. Further, for the action data, the code development platform 10 may further perform preprocessing, for example, perform data cleaning and normalization. For the function description speech of the workflow, the code development platform 10 may perform speech-to-text. For the function description text or a text obtained by converting the function description speech, the code development platform 10 may further perform text optimization and enhancement. Text optimization and enhancement may be generating a large amount of annotated data by using a small amount of annotated data on a premise that label semantics remain unchanged as far as possible.

Then, the code development platform 10 may replace a keyword in the function description text (for example, an enhanced text, an original function description text, or a text converted from the function description speech) with an independent call statement, where the call statement includes a trigger/action that can be independently called. The code development platform 10 may use a language model (language model, LM) to replace the keyword in the function description text with the call statement. Considering that some language models, especially a generative model, may generate an API call that does not exist, the code development platform 10 may further verify the call statement in the function description text after replacement by using the collected action data, so as to subsequently generate a controllable and executable workflow.

The code development platform 10 may mine a logical relationship of a trigger/action in the call statement based on the function description text including the call statement. Specifically, the code development platform 10 may mine and analyze the function description text including the call statement by using an LM, an attention (attention) model, or a graph neural network (Graph Neural Network, GNN) model, to obtain the logical relationship of the trigger/action in the call statement.

Then, the code development platform 10 may generate code of the workflow based on the logical relationship. The code development platform 10 may use a language model LM to generate, in an extended manner, code of a plurality of workflows including complex service logic. The code development platform 10 may determine a candidate workflow from the plurality of workflows based on at least one workflow quality evaluation indicator of attention (attention) or quality, to determine code of the candidate workflow. The code development platform 10 may render a view of the candidate workflow based on the code of the candidate workflow. The code development platform 10 is further configured to perform service orchestration on the view of the candidate workflow, execute an orchestrated service in a sandbox, and determine code of a final workflow based on an execution result. The code development platform 10 updates a model parameter based on reinforcement learning fed back by a human. The model parameter includes but is not limited to a parameter of a model (such as an LM) that replaces a text with a trigger/action that can be independently called, a parameter of a model (such as a parameter of an attention model, a parameter of a GNN model, or a parameter of an LM) that mines a logical relationship of a trigger/action, and a parameter of a model (such as an LM) that generates a workflow.

After training is completed, the code development platform 10 may perform inference by using a trained AI model, to generate the code of the workflow.

Specifically, the code development platform 10 may receive original function description information input by the user, where the original function description information may be a function description text or a function description speech of a target workflow. When the function description information is a function description speech, the code development platform 10 may first perform speech-to-text, and then the code development platform 10 may perform text optimization and enhancement. Then, the code development platform 10 may perform replacement processing on the text by using the trained AI model, for example, an LM used to replace a keyword to obtain a call statement, to obtain a function description text including a call statement. The code development platform 10 then mines a logical relationship by using the trained AI model, for example, an attention model, a GNN model, or an LM that is used to mine a logical relationship of a trigger/action. Further, the code development platform 10 generates, in a diffusion manner based on the trained AI model, for example, an LM used to generate a workflow, code of a workflow including complex service logic. The code development platform 10 may determine code of a candidate workflow from generated code of a plurality of workflows, may render a view of the candidate workflow based on the code of the candidate workflow, perform service orchestration on the view of the candidate workflow, then execute an orchestrated service in a sandbox, and determine code of a final workflow based on an execution result, namely, code of a target workflow. In addition, the code development platform 10 may further determine a view of the target workflow. Further, the user may further evaluate the code of the target workflow, for example, evaluate code quality. The code development platform 10 may further receive evaluation information fed back by the user for the code of the target workflow. For example, the model management subsystem 400 in the code development platform 10 may obtain annotation data based on the evaluation information, and the annotation data may be used for model training.

To make the technical solutions of this application clearer and easier to understand, the following describes a code development method of this application with reference to the accompanying drawings.

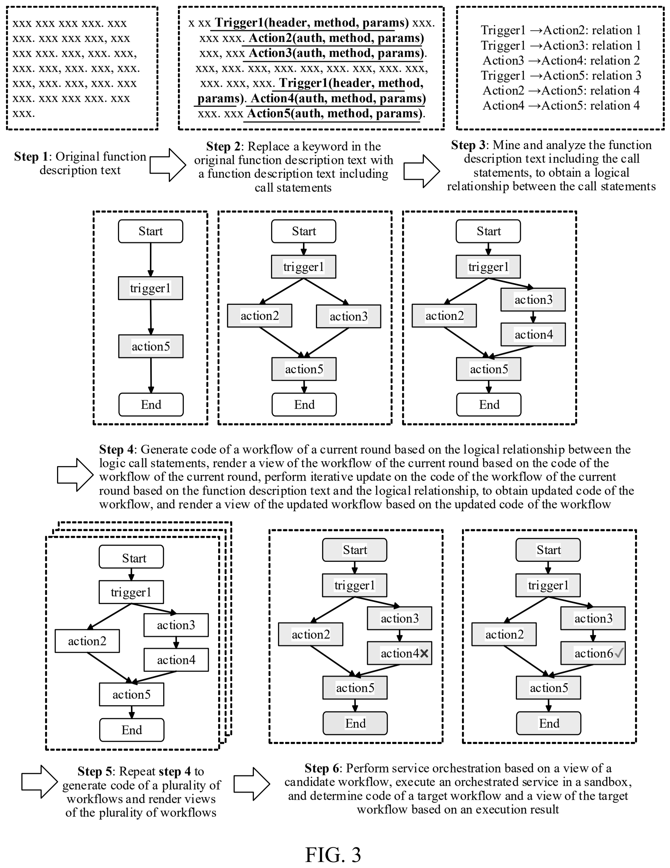

Refer to a schematic flowchart of a code development method shown in FIG. 3. The method includes the following steps.

Step 1: A code development platform 10 receives an original function description text input by a user.

Step 2: The code development platform 10 replaces a keyword in the original function description text with a function description text including call statements.

The keyword may be a service function description. The call statements include a trigger call statement used to start the target workflow and an action interface call statement used to execute the target workflow. Replacing the keyword in the original function description text with the function description text including the call statements is specifically replacing a service function description in the text with an independent trigger/action call.

A call syntax includes at least one of a trigger/action name, an authentication and authorization manner, a request method (for example, a hypertext transfer protocol (Hypertext Transfer Protocol, HTTP) request method), and a request header/request input parameter. During specific implementation, a syntax for replacing the service function description with a trigger/action call may be defined first.

A call rule of a trigger may be defined as <TRIGGER> trigger(header, method, params) </TRIGGER>. A call rule of a connector (for example, an action interface action) may be defined as <ACTION> provider_action(auth, method, params) </ACTION>. <> is used to identify trigger and action types. Content before the parentheses is trigger and action names. Content in the parentheses includes an authentication and authorization manner (auth), an HTTP request method (method), a request header (header), a request input parameter (params), and the like.

Essence of step 2 is to convert a text that complies with a specific syntax into/generate another text that complies with another syntax, which may be implemented based on at least one of a manually set rule and an AI model (for example, a deep learning model such as a language model). This embodiment is described by using the language model as an example. To ensure conversion/generation accuracy and reduce costs of manual annotation in a model training phase, a self-supervised method may be used.

Steps for converting/generating data in a self-supervised mode based on the language model are as follows:
1. Generate a plurality of candidate call statements: Based on an instruction learning (instruction learning) method, input an original description text into a pre-trained language model, use the language model to generate data replaced with a connector call identifier, and preliminarily retain a connector call and related input parameter data that are greater than a probability threshold and comply with a syntax during generation.
2. Retain a high-quality generation result: According to a predefined determining rule, for example, generate at least one of a probability increase value and a loss decrease value before and after replacement, and finally retain a function description text that meets a related rule. The function description text is a text for replacing a service function description by using a trigger/action call.

To ensure that a generated trigger/action can pass debugging, the code development platform 10 supports user-assisted confirmation or modification (assisted replacement) in a manual manner. For example, the code development platform 10 presents the function description text after replacement to the user, and receives confirmation information or update information of the user for the call statements in the function description text. In some embodiments, the code development platform 10 may also send a request by name and an input parameter in an automatic manner, and finally retain a trigger/action that can successfully obtain a response result. Specifically, the code development platform 10 may send a request based on a name of a trigger or an action interface and an input parameter in the call statement; and when a response is received, retain the trigger or the action interface in the function description text.

It should be noted that FIG. 3 is described by using an example in which the user inputs an original function description text. In another possible implementation of this embodiment of this application, the user may alternatively input an original function description speech. The code development platform 10 may perform speech-to-text on the original function description speech, and then the code development platform 10 may replace a keyword in a text obtained through conversion with a call statement, to obtain a function description text including the call statement. The foregoing step 1 and step 2 are a specific implementation of receiving, by the code development platform 10, function description information that is of a target workflow and that is input by a user, and obtaining, based on the function description information, a function description text including call statements, and do not constitute a limitation on the technical solutions of this application.

Step 3: The code development platform 10 mines and analyzes the function description text including the call statements, to obtain a logical relationship between the call statements.

The logical relationship between the call statements includes a logical relationship between a trigger call statement and an action interface call statement. Further, the logical relationship between the call statements may further include a logical relationship between a first action interface call statement and a second action interface call statement. In other words, the logical relationship between the call statements may include a logical relationship between a trigger and an action. Further, the logical relationship between the call statements may further include a logical relationship between actions.

To mine a complex logical relationship of a trigger/action that meet a service function required by the user, the code development platform 10 may mine and analyze, by using a machine learning or deep learning method such as a language model, an attention model, or a GNN model, a function description text including call statements.

In some possible implementations, for a group of trigger and action (for example, one trigger and one action), or a group of actions (for example, two actions), the code development platform 10 may mine a plurality of logical relationships by using different models (different algorithms). The code development platform 10 may further determine a final logical relationship based on a certainty probability (also referred to as a confidence probability), or the code development platform 10 may vote for logical relationships output by a plurality of models, to determine a final logical relationship.

Further, the code development platform 10 may further normalize the logical relationship. A normalized logical relationship may include one or more of a parameter dependency, a serial execution sequence, a parallel group number, a conditional branch, and a loop.

To ensure accuracy of mining the logical relationships of triggers/actions, the user may assist in confirmation or perform modification and replacement. Specifically, the code development platform 10 may present the logical relationship between the call statements to the user, specifically, the logical relationship of the trigger/action in the call statements. The code development platform 10 may present a trigger and an action that are associated, or actions that are associated, and present a corresponding relation type.

In the example in FIG. 3, the code development platform 10 may present the following logical relationships:
Trigger1→Action2: relation1
Trigger 1→Action3: relation1
Action3→Action4: relation2
Trigger1→Action5: relation3
Action2→Action5: relation4
Action4→Action5: relation4

relation1, relation2, relation3, and relation4 each may be a parameter dependency, a serial execution sequence, a parallel group number, a conditional branch, and a loop. It should be noted that some logical relationships may be directed. For example, Action3→Action4: relation2 may indicate that Action3 and Action4 are executed in serial, and Action3 is executed earlier than Action4.

The code development platform 10 may receive confirmation information or update information of the user for the logical relationship. The update information may include at least one piece of: update information for a relation type or update information for an endpoint (for example, a trigger or an action) of the logical relationship. For example, the user may modify Action4 in Action4→Action5: relation4 to Action3. Correspondingly, the code development platform 10 may receive update information of an endpoint of the logical relationship. For another example, the user may modify relation4 in Action4→Action5: relation4 to relation2. Correspondingly, the code development platform 10 may receive update information of the relation type.

It should be noted that, when the code development platform 10 presents the function description text including the call statements to the user for assisted confirmation or replacement, when mining the logical relationship, the code development platform 10 may mine and analyze a function description text confirmed by the user or an updated function description text, to obtain the logical relationship between the call statements.

Step 4: The code development platform 10 generates code of a workflow of a current round based on the logical relationship between the logic call statements, renders a view of the workflow of the current round based on the code of the workflow of the current round, performs iterative update on the code of the workflow of the current round based on the function description text and the logical relationship, to obtain updated code of the workflow, and renders a view of the updated workflow based on the updated code of the workflow.

The view of the workflow of the current round includes a first node. The view of the updated workflow includes the first node and a second node. The second node is different from the first node. In some examples, the first node may include a trigger node and some action nodes, and the second node may include some action nodes.

When code of the target workflow is generated in a diffusion generation manner, the code development platform 10 may further first identify a key node, and generate code of the key node, thereby improving generation accuracy. Specifically, the first node may be a key node identified based on the logical relationship. The code development platform 10 may identify the key node based on at least one of a quantity of times that a node appears in the logical relationship, a quantity of times that a node appears in a branch, a certainty probability of an association relationship, and attention of the association relationship. For example, the code development platform 10 may determine a quantity of times that each action node appears in the logical relationship, and determine an action node with a largest quantity of times as a first node or action nodes ranked top n (n is greater than 1) as first nodes. In this example, the first node may further include a trigger node.

In each round of diffusion, the code development platform 10 may generate code of a next round of workflow (iterative update on the code of the workflow) by using context information in the foregoing steps, for example, a function description text after replacement by using a trigger/action, the logical relationship, and code of a workflow generated in a previous round (also referred to as a prior round or a preceding round). The code development platform 10 may generate the code of the workflow by using a language model or another machine learning/deep learning algorithm. A stop condition for generating code of a workflow by the code development platform 10 in the diffusion manner may be that a diffusion round (an iteration round) reaches a specified quantity of times, or generation reaches a specified end identifier.

It should be noted that, when the code development platform 10 presents the logical relationship to the user for assisted confirmation or assisted replacement, the code development platform 10 may generate, based on a confirmed logical relationship or an updated logical relationship, the code of the workflow corresponding to the function description information.

In addition, in a workflow generation process of the code development platform 10, if a generation error occurs, the user may intervene in time. The code development platform 10 may regenerate a new node based on a previous correctly generated node, so as to update the workflow iteratively. Specifically, the code development platform 10 may present the workflow of the current round to the user, and update, in response to an update operation of the user, at least one of a node or a node connection relationship in the workflow of the current round.

Step 4 is a specific implementation of generating, by the code development platform 10 based on the logical relationship, the code of the workflow corresponding to the function description information, and rendering the view of the workflow based on the code of the workflow. In another possible implementation of this embodiment of this application, the workflow may be generated in another manner. For example, the code development platform 10 may generate, based on the logical relationship and by using a learned rule, the code of the workflow corresponding to the function description information.

Step 5: The code development platform 10 repeats step 4, so as to generate code of a plurality of workflows corresponding to the function description information, and render views of the plurality of workflows based on the code of the plurality of workflows.

Specifically, the code development platform 10 may generate, based on the diffusion generation manner in step 4, code of a plurality of workflows corresponding to the function description information, and separately parse the code of each workflow by using a front-end component, so as to render a view of each workflow. For example, the code development platform 10 may repeat step 4 for a plurality of times, so as to generate code of more than 10 alternative workflows, and render views of the alternative workflows based on the code of the alternative workflows.

Further, the code development platform 10 may further evaluate and screen quality of the generated code of the workflows based on a specified indicator. For example, the code development platform 10 determines, from the code of the plurality of workflows based on at least one of complexity of the code or attributes of action interfaces of the plurality of workflows, code of a plurality of candidate workflows corresponding to the function description information. The complexity of the code is generally positively correlated with complexity of a directed graph in the view. Based on this, the complexity may be determined based on at least one of a branch quantity or an average node quantity of a branch. A larger branch quantity indicates a larger average node quantity of a branch and higher complexity. The attribute of the action interface may include at least one of an action call fee, an action release date, and an action provider. For example, the code development platform 10 may determine, based on the action provider from a plurality of workflows, a workflow in which a specified provider, for example, a specified vendor, provides an action as a candidate workflow.

Further, the user may assist in confirming or adjusting a priority of the candidate workflow. The code development platform 10 presents the candidate workflow to the user, and receives confirmation information or update information of the user for the candidate workflow.

Step 6: The code development platform 10 performs service orchestration based on a view of the candidate workflow, executes an orchestrated service in a sandbox, and determines the code of the target workflow and a view of the target workflow based on an execution result.

The code development platform 10 may perform automatic parameter filling for the code of the candidate workflow, then perform service orchestration based on a view of a workflow obtained after the parameter is filled in, execute the orchestrated service in the sandbox, and select the code of the target workflow based on the execution result in the sandbox. Automatic parameter filling may be implemented through text mining. Specifically, the code development platform 10 may mine parameters related to the trigger and the action from the function description text, and then automatically fill in the parameters based on a mining result.

In some possible implementations, the code development platform 10 may further perform parameter verification. Parameter verification is classified into tool verification and manual verification. Tool verification may be classified into static verification and dynamic verification. Static verification verifies a parameter type and a parameter range by using a tool. Dynamic verification mainly detects a problem during running by executing a workflow (for example, in the sandbox). Manual verification is implemented through manually assisted confirmation.

In this embodiment, the code development platform 10 may determine, as the code of the target workflow, code of a candidate workflow corresponding to a service successfully executed in the sandbox. In this way, high-quality code of a workflow can be selected, and the code of the workflow can be successfully executed. When services corresponding to a plurality of candidate workflows can be successfully executed, the code development platform 10 may further determine, based on a preset indicator, the code of the target workflow from the code of the candidate workflows corresponding to the plurality of successfully executed services. The preset indicator may include at least one of performance (for example, execution time consumption) and complexity.

It should be noted that step 5 and step 6 are optional steps in this embodiment of this application, and step 5 and step 6 may not be performed when the code development method in this application is performed. For example, the code development platform 10 may generate the code of the workflow of the current round based on the logical relationship between the call statements, render the view of the workflow of the current round based on the code of the workflow of the current round (for example, including the first node), then perform iterative update on the code of the workflow of the current round based on the function description text and the logical relationship, to obtain the code of the target workflow, and render the view of the target workflow based on the code of the target workflow. For example, when iterative update on the code of the workflow meets a stop condition, the code development platform 10 may determine updated code of the workflow as the code of the target workflow, and render the view of the target workflow (for example, including the first node and the second node) based on the code of the target workflow.

It can be learned from the foregoing content description that, according to the code development method in this embodiment of this application, code of an executable workflow can be generated in a controllable and stable manner based on a function description text/speech input by a user, complex service logic can be constructed, a trigger/action parameter can be filled in, different authentication and authorization manners can be processed, and the code of the workflow can be automatically debugged and executed. This can reduce time costs for low-code development for a developer, improve development efficiency, and ensure that parameter filling for low-code development is accurate and complete, helping quickly and accurately release a service of low-code development.

This application further provides a code development platform 10. As shown in FIG. 1, the code development platform 10 is configured to generate code of a workflow, and the code development platform 10 includes:
an interaction subsystem 100, configured to receive function description information that is of a target workflow and that is input by a user; and
a generation subsystem 200, configured to obtain, based on the function description information, a function description text including call statements, where the call statements include a trigger call statement used to start the target workflow and an action interface call statement used to execute the target workflow;
the generation subsystem 200 is further configured to mine and analyze the function description text to obtain a logical relationship between the call statements; and
the generation subsystem 200 is further configured to generate code of the target workflow based on the logical relationship between the call statements, and render a view of the target workflow based on the code of the target workflow.

For example, the interaction subsystem 100 and the generation subsystem 200 may be implemented by using hardware, or may be implemented by using software. The following uses the generation subsystem 200 as an example for description.

When implemented by using software, the generation subsystem 200 may be an application program running on a computer device, for example, a computing engine. Further, the application program may be virtualized by using a virtualization service. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts by using the virtualization technology, to provide a VM for the user on demand. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, the BMS service, and the container service in the virtualization service are merely used as specific examples. During actual application, the virtualization service may alternatively be another lightweight or heavyweight virtualization service. This is not specifically limited herein.

When implemented by using hardware, the generation subsystem 200 may include at least one computing device, for example, a server. Alternatively, the generation subsystem 200 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

In some possible implementations, the generation subsystem 200 is specifically configured to:
generate code of a workflow of a current round based on the logical relationship between the call statements, and render a view of the workflow of the current round based on the code of the workflow of the current round, where the view of the workflow of the current round includes a first node, and the first node is a key node identified based on the logical relationship; and
perform iterative update on the code of the workflow of the current round based on the function description text and the logical relationship, to obtain the code of the target workflow, and render the view of the target workflow based on the code of the target workflow, where the view of the target workflow includes the first node and a second node.

In some possible implementations, the interaction subsystem 100 is further configured to:
present the view of the workflow to the user; and
the generation subsystem is further configured to:
   update at least one of a node or a node connection relationship in the view of the workflow in response to an update operation of the user.

In some possible implementations, the generation subsystem 200 is specifically configured to:
generate code of a plurality of candidate workflows based on the logical relationship between the call statements, and render views of the plurality of candidate workflows based on the code of the plurality of candidate workflows; and
the code development platform 10 further includes:
   a debugging and release subsystem 300, configured to determine the code of the target workflow and determine the view of the target workflow based on an execution result that is in a sandbox and that is of a service orchestrated for the views of the plurality of candidate workflows.

In some possible implementations, the generation subsystem 200 is specifically configured to:
generate code of a plurality of workflows based on the logical relationship between the call statements; and
determine the code of the plurality of candidate workflows from the code of the plurality of workflows based on at least one of complexity of the code or attributes of action interfaces of the plurality of workflows.

In some possible implementations, the interaction subsystem 100 is further configured to:
present the logical relationship between the call statements to the user; and
receive confirmation information or update information of the user for the logical relationship; and
the generation subsystem 200 is specifically configured to:
   generate the code of the target workflow based on a confirmed logical relationship or an updated logical relationship.

In some possible implementations, the generation subsystem is further configured to:
send a request based on a name of a trigger or an action interface and an input parameter in the call statement; and
when a response is received, retain the trigger or the action interface in the function description text.

In some possible implementations, the interaction subsystem 100 is further configured to:
present the function description text to the user; and
receive confirmation information or update information of the user for the call statements in the function description text; and
the generation subsystem 200 is specifically configured to:
   mine and analyze the function description text confirmed by the user or the function description text replaced by the user, to obtain the logical relationship between the call statements.

In some possible implementations, the code development platform 10 further includes a model management subsystem 400. The model management subsystem 400 is configured to construct a rule model or an AI model. The rule model may include at least one of a rule used to replace a keyword with a call statement, a rule used to obtain a logical relationship based on a function description text including call statements, and a rule used to generate code of a workflow based on a logical relationship. The AI model may include at least one of a model used to replace a keyword with a call statement, a model used to obtain a logical relationship based on a function description text including call statements, and a model used to generate code of a workflow based on a logical relationship.

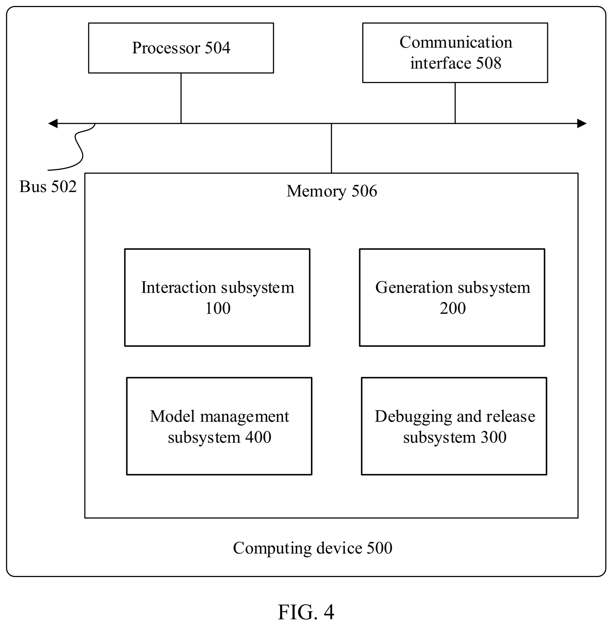

This application further provides a computing device 500. As shown in FIG. 4, the computing device 500 includes a bus 502, a processor 504, a memory 506, and a communication interface 508. The processor 504, the memory 506, and the communication interface 508 communicate with each other through the bus 502. The computing device 500 may be a server or a terminal device. It should be understood that quantities of processors and memories of the computing device 500 are not limited in this application.

The bus 502 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 4, but this does not mean that there is only one bus or only one type of bus. The bus 502 may include a path for information transmission between components (for example, the memory 506, the processor 504, and the communication interface 508) of the computing device 500.

The processor 504 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 506 may include a volatile memory (volatile memory), for example, a random access memory (random access memory, RAM). Alternatively, the memory 506 may include a non-volatile memory (non-volatile memory), for example, a read-only memory (read-only memory, ROM), a flash memory, a hard disk drive (hard disk drive, HDD), or a solid-state drive (solid-state drive, SSD). The memory 506 stores executable program code. The processor 504 executes the executable program code to implement the foregoing code development method. Specifically, the memory 506 stores instructions used by the code development platform 10 to perform the code development method.

The communication interface 508 uses a transceiver module, for example, but not limited to, a network interface card or a transceiver, to implement communication between the computing device 500 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

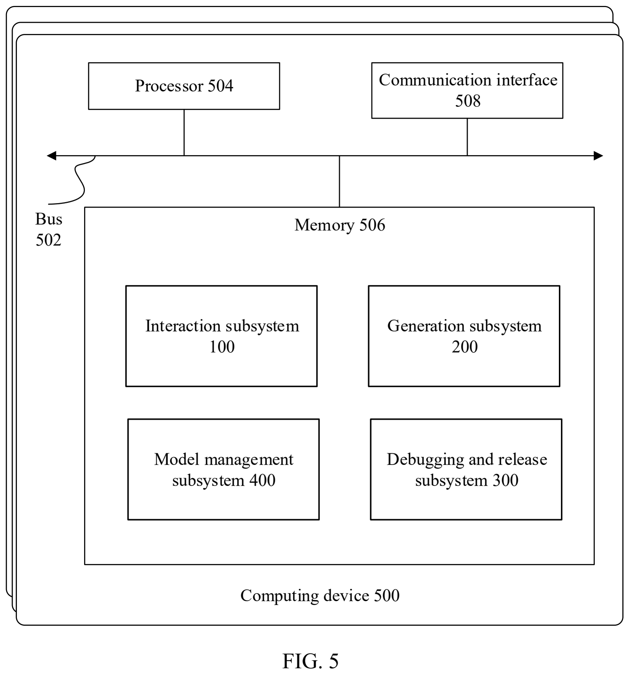

As shown in FIG. 5, the computing device cluster includes at least one computing device 500. A memory 506 in one or more computing devices 500 in the computing device cluster may store same instructions used by a code development platform 10 to perform a code development method.

In some possible implementations, the one or more computing devices 500 in the computing device cluster may alternatively be configured to execute some instructions used by the code development platform 10 to perform the code development method. In other words, a combination of the one or more computing devices 500 may jointly execute the instructions used by the code development platform 10 to perform the code development method.

It should be noted that memories 506 in different computing devices 500 in the computing device cluster may store different instructions used for performing some functions of the code development platform 10.

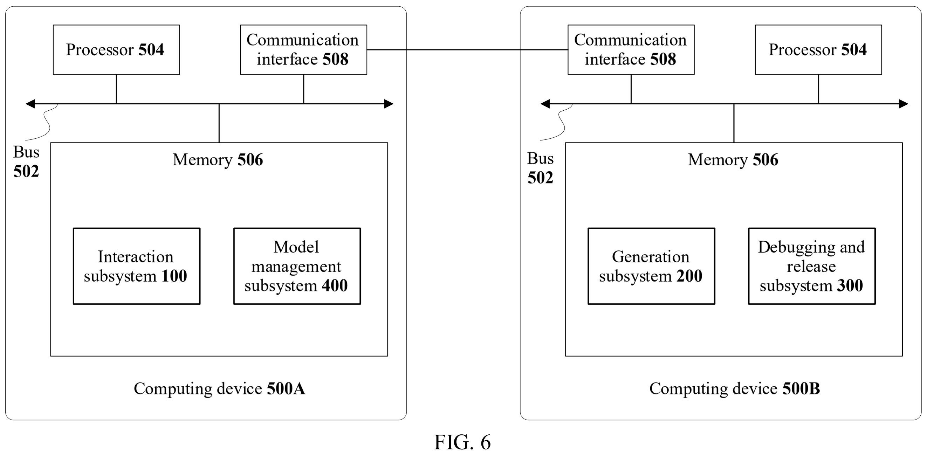

FIG. 6 shows a possible implementation. As shown in FIG. 6, two computing devices 500A and 500B are connected by using a communication interface 508. A memory in the computing device 500A stores instructions used to execute a function of an interaction subsystem 100. A memory in the computing device 500B stores instructions used to execute a function of a generation subsystem 200. Optionally, the memory in the computing device 500A may further store instructions used to execute a function of a model management subsystem 400, and the memory in the computing device 500B may further store instructions used to execute a function of a debugging and release subsystem 300. In other words, the memories 506 of the computing devices 500A and 500B jointly store instructions used by a code development platform 10 to perform a code development method.

A connection manner between computing device clusters shown in FIG. 6 may be that, considering that the code development method provided in this application requires a large amount of computing power for code development, and in particular, a large amount of computing power is required for diffusion generation, the function implemented by the generation subsystem 200 is switched to be executed by the computing device 500B.

It should be understood that the function of the computing device 500A shown in FIG. 6 may alternatively be completed by a plurality of computing devices 500. Similarly, the function of the computing device 500B may alternatively be completed by a plurality of computing devices 500.

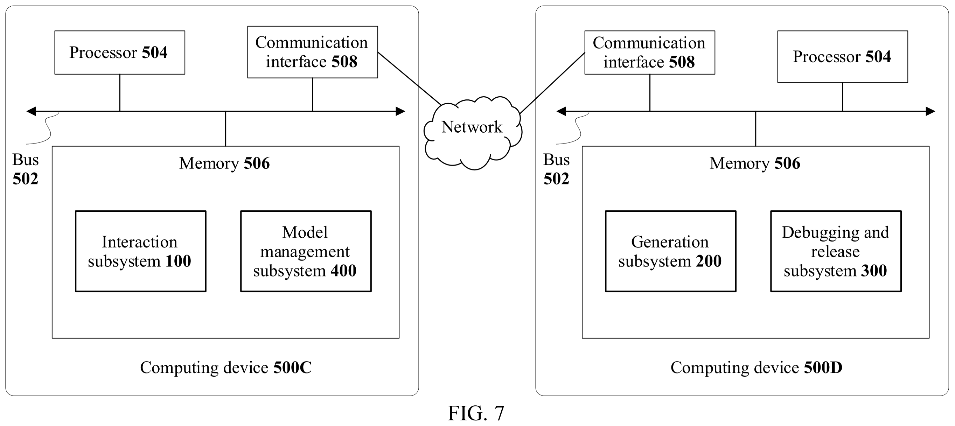

In some possible implementations, the one or more computing devices in the computing device cluster may be connected through a network. The network may be a wide area network, a local area network, or the like. FIG. 7 shows a possible implementation. As shown in FIG. 7, two computing devices 500C and 500D are connected through a network. Specifically, each computing device is connected to the network through a communication interface of the computing device. In this type of possible implementation, a memory 506 in the computing device 500C stores instructions for executing a function of an interaction subsystem 100. In addition, a memory 506 in the computing device 500D stores instructions for executing a function of a generation subsystem 200. Optionally, the memory in the computing device 500A may further store instructions used to execute a function of a model management subsystem 400, and the memory in the computing device 500B may further store instructions used to execute a function of a debugging and release subsystem 300.

A connection manner between computing device clusters shown in FIG. 7 may be that, considering that the code development method provided in this application requires a large amount of computing power for diffusion generation, the function implemented by the generation subsystem 200 is switched to be executed by the computing device 500D.

It should be understood that the function of the computing device 500C shown in FIG. 7 may alternatively be completed by a plurality of computing devices 500. Similarly, the function of the computing device 500D may alternatively be completed by a plurality of computing devices 500.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the foregoing code development method applied to the code development platform 10.

An embodiment of this application further provides a computer program product including instructions. The computer program product may be a software or program product that includes instructions and that can be run on a computing device or be stored in any usable medium. When the computer program product is run on at least one computing device, the at least one computing device is enabled to perform the foregoing code development method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the protection scope of the technical solutions in embodiments of the present invention.

## Claims

1. A code development method, applied to a code development platform, wherein the code development platform is configured to generate code of a workflow, and the method comprises:
receiving function description information that is of a target workflow and that is input by a user;
obtaining, based on the function description information, a function description text comprising call statements, wherein the call statements comprise a trigger call statement used to start the target workflow and an action interface call statement used to execute the target workflow;
mining and analyzing the function description text to obtain a logical relationship between the call statements; and
generating code of the target workflow based on the logical relationship between the call statements, and rendering a view of the target workflow based on the code of the target workflow.

2. The method according to claim 1, wherein generating the code of the target workflow based on the logical relationship between the call statements, and rendering the view of the target workflow based on the code of the target workflow comprises:
generating code of a workflow of a current round based on the logical relationship between the call statements, and rendering a view of the workflow of the current round based on the code of the workflow of the current round, wherein the view of the workflow of the current round comprises a first node, and the first node is a key node identified based on the logical relationship; and
performing iterative update on the code of the workflow of the current round based on the function description text and the logical relationship, to obtain the code of the target workflow, and rendering the view of the target workflow based on the code of the target workflow, wherein the view of the target workflow comprises the first node and a second node.

3. The method according to claim 2, wherein the method further comprises:
presenting the view of the workflow to the user; and
updating at least one of a node or a node connection relationship in the view of the workflow in response to an update operation of the user.

4. The method according to any one of claims 1 to 3, wherein generating the code of the target workflow based on the logical relationship between the call statements, and rendering the view of the target workflow based on the code of the target workflow comprises:
generating code of a plurality of candidate workflows based on the logical relationship between the call statements, and rendering views of the plurality of candidate workflows based on the code of the plurality of candidate workflows; and
determining the code of the target workflow and determining the view of the target workflow based on an execution result that is in a sandbox and that is of a service orchestrated for the views of the plurality of candidate workflows.

5. The method according to claim 4, wherein generating the code of the plurality of candidate workflows based on the logical relationship between the call statements comprises:
generating code of a plurality of workflows based on the logical relationship between the call statements; and
determining the code of the plurality of candidate workflows from the code of the plurality of workflows based on at least one of complexity of the code or attributes of action interfaces of the plurality of workflows.

6. The method according to any one of claims 1 to 5, wherein the method further comprises:
presenting the logical relationship between the call statements to the user; and
receiving confirmation information or update information of the user for the logical relationship; and
generating the code of the target workflow based on the logical relationship between the call statements comprises:
generating the code of the target workflow based on a confirmed logical relationship or an updated logical relationship.

7. The method according to any one of claims 1 to 6, wherein the method further comprises:
sending a request based on a name of a trigger or an action interface and an input parameter in the call statement; and
when a response is received, retaining the trigger or the action interface in the function description text.

8. The method according to any one of claims 1 to 6, wherein the method further comprises:
presenting the function description text to the user; and
receiving confirmation information or update information of the user for the call statements in the function description text; and
mining and analyzing the function description text to obtain the logical relationship between the call statements comprises:
mining and analyzing the function description text confirmed by the user or the function description text replaced by the user, to obtain the logical relationship between the call statements.

9. A code development platform, wherein the code development platform is configured to generate code of a workflow, and the code development platform comprises:
an interaction subsystem, configured to receive function description information that is of a target workflow and that is input by a user; and
a generation subsystem, configured to obtain, based on the function description information, a function description text comprising call statements, wherein the call statements comprise a trigger call statement used to start the target workflow and an action interface call statement used to execute the target workflow;
the generation subsystem is further configured to mine and analyze the function description text to obtain a logical relationship between the call statements; and
the generation subsystem is further configured to generate code of the target workflow based on the logical relationship between the call statements, and render a view of the target workflow based on the code of the target workflow.

10. The code development platform according to claim 9, wherein the generation subsystem is specifically configured to:
generate code of a workflow of a current round based on the logical relationship between the call statements, and render a view of the workflow of the current round based on the code of the workflow of the current round, wherein the view of the workflow of the current round comprises a first node, and the first node is a key node identified based on the logical relationship; and
perform iterative update on the code of the workflow of the current round based on the function description text and the logical relationship, to obtain the code of the target workflow, and render the view of the target workflow based on the code of the target workflow, wherein the view of the target workflow comprises the first node and a second node.

11. The code development platform according to claim 10, wherein the interaction subsystem is further configured to:
present the view of the workflow to the user; and
the generation subsystem is further configured to:
update at least one of a node or a node connection relationship in the view of the workflow in response to an update operation of the user.

12. The code development platform according to any one of claims 9 to 11, wherein the generation subsystem is specifically configured to:
generate code of a plurality of candidate workflows based on the logical relationship between the call statements, and render views of the plurality of candidate workflows based on the code of the plurality of candidate workflows; and
the code development platform further comprises:
a debugging and release subsystem, configured to determine the code of the target workflow and determine the view of the target workflow based on an execution result that is in a sandbox and that is of a service orchestrated for the views of the plurality of candidate workflows.

13. The code development platform according to claim 12, wherein the generation subsystem is specifically configured to:
generate code of a plurality of workflows based on the logical relationship between the call statements; and
determine the code of the plurality of candidate workflows from the code of the plurality of workflows based on at least one of complexity of the code or attributes of action interfaces of the plurality of workflows.

14. The code development platform according to any one of claims 9 to 13, wherein the interaction subsystem is further configured to:
present the logical relationship between the call statements to the user; and
receive confirmation information or update information of the user for the logical relationship; and
the generation subsystem is specifically configured to:
generate the code of the target workflow based on a confirmed logical relationship or an updated logical relationship.

15. The code development platform according to any one of claims 9 to 14, wherein the generation subsystem is further configured to:
send a request based on a name of a trigger or an action interface and an input parameter in the call statement; and
when a response is received, retain the trigger or the action interface in the function description text.

16. The code development platform according to any one of claims 9 to 15, wherein the interaction subsystem is further configured to:
present the function description text to the user; and
receive confirmation information or update information of the user for the call statements in the function description text; and
the generation subsystem is specifically configured to:
mine and analyze the function description text confirmed by the user or the function description text replaced by the user, to obtain the logical relationship between the call statements.

17. A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 8.

18. A computer-readable storage medium, comprising computer program instructions, wherein when the computer program instructions are executed by a computing device cluster, the computing device cluster performs the method according to any one of claims 1 to 8.
